# EUROPEAN PATENT APPLICATION

(11) **EP 0 948 163 A1**
(43) Date of publication of application: **06.10.1999**
(21) Application number: 98302533.9
(22) Date of filing: 01.04.1998
(51) Int. Cl.: H04L 12/26, H04Q 3/00

(54) **Generating telephony service detail records**

(71) Applicant: HEWLETT-PACKARD COMPANY, Palo Alto, California 94304-1181 (US)
(72) Inventor: Mottishaw, Peter John, West Lothian, EH30 9XU, Scotland (GB)
(74) Representative: Coker, David Graeme

(57) **Abstract**

Generalised service detail records are created for a telephony service carried over a packet data network by monitoring packet network service data, signalling data and quality of service data, and combining these data to produce the required service detail records.

## Description

### Technical Field

This invention relates to methods and apparatus for generating telephony service detail records, and to monitoring systems for collecting data for these records from a network, such as a packet data network, which is used for example to carry multimedia services (as described in ITU recommendation H.323 or the IETF SIP standard).

### Background

The provision of multimedia communications services over a packet data network (PDN) which may not provide quality of service guarantees has recently generated a great deal of interest due to the success of networks based on the internet protocols (TCP/IP). Network operators are currently trialing multimedia communications services over a variety of packet data networks such as IP, Frame Relay (FR) and Asynchronous Transfer Mode (ATM). A major problem is to generate service detail records (generalised call data records), in real-time or batch-mode, which measure the service usage of individual users and the service quality that was actually experienced by the user.

### Disclosure of Invention

The invention described here enables a network operator to generate such records on a pure PDN, or on a hybrid network of interconnected PDNs and switched circuit networks (SCNs). It also includes a method for automatically discovering the network configuration information, including addressing and identifying the relationships between gatekeepers and endpoints.

According to one aspect of this invention there is provided a method of monitoring a packet data sub-network (e.g. ethernet segment) or link (e.g. a T3 link carrying IP over PPP), comprising the steps of monitoring at a first location signalling messages to detect the existence of a call; and monitoring at multiple other locations to identify some or all packets associated with the call (in H.323, the Call ID can be used to identify all packets associated with a given call). The captured packets may include both signalling data and data from multimedia streams associated with the call. It may be required for wire-tap applications, for example, to use the signalling data to identify calls of interest, and then capture the entire multimedia stream. It may be necessary to buffer captured packets at each location to ensure that all packets associated with the call could be captured.

In addition, the packets associated with a conference call can be correlated together to form a service record for a conference call. This can be achieved by capturing all packets with the same conference ID in H.323, for example.

In some cases it may be desirable to monitor additional signalling messages, e.g. Signalling System No.7 (SS7) protocol messages or Integrated Services Digital Network (ISDN) messages, on signalling links in an SCN (such as the public switched telephone network - PSTN) coupled to said packet data network, to derive additional monitoring data, and correlate those additional monitoring data with at least some of first monitoring data. These can be correlated to the original call by using characteristics such as calling or called party numbers to identify the call.

Other aspects of the invention are identified in the appended claims.

### Brief Description of Drawings

Methods and apparatus in accordance with this invention for generating telephone service detail records will now be described, by way of example, with reference to the accompanying drawings, in which:
- Figure 1: shows a distributed monitoring system for a PDN carrying multimedia voice services;
- Figure 2: shows examples of extensions of this architecture to correlate data from the PDN with signalling data from the SCN;
- Figure 3: shows the sequence of message types which can be captured to construct a service detail record: and
- Figure 4: shows an example of the structure of a service record that could be constructed from the data collected by the monitoring system.

### Best Mode for Carrying Out the Invention, & Industrial Applicability

The distributed monitoring system shown in the drawings has the capability to collect data from a combined PDN and SCN carrying multimedia services, correlate these data in real-time, and provide a real-time view of services on the network. These data can be used for applications such as troubleshooting, surveillance, security, network planning, provision of accounting information to customers, fraud detection, billing and acquisition of marketing information.

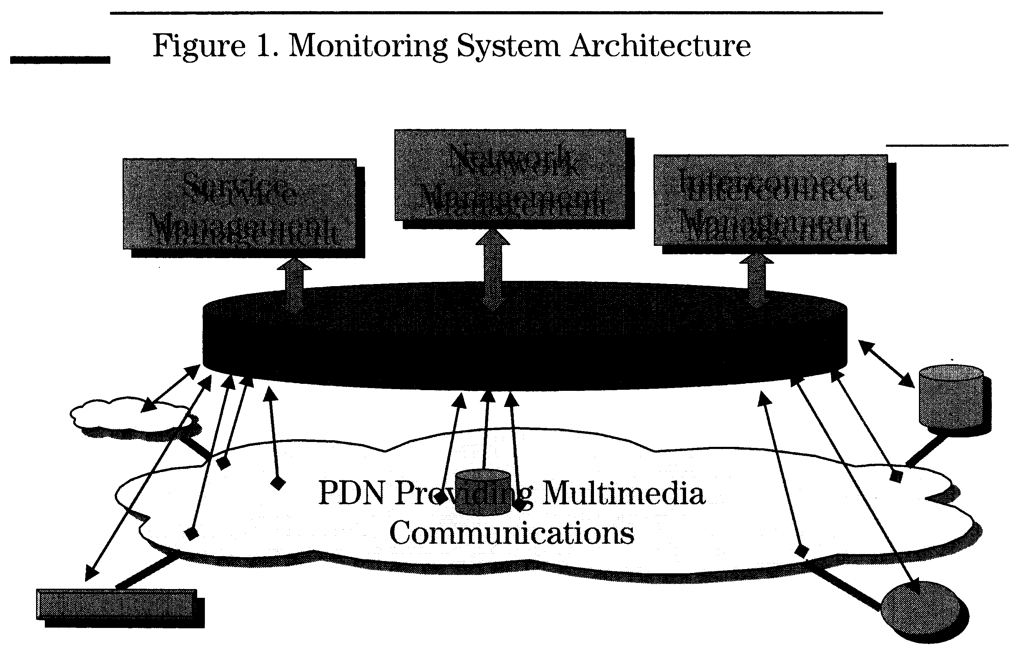

Referring to Figure 1, the probes shown are part of a distributed monitoring system, and are link monitoring devices (using techniques similar to those in existing protocol analysers for example). The distributed monitoring system is constructed from the probes and standard computer and communications components, with special-purpose software which provides the applications described above. A principal function of this software is to correlate data from different probes to provide a record or real-time trace of calls, transactions and other services as they occur on the network. The Hewlett-Packard *acceSS7* system is an example of a distributed monitoring system which could be used to implement parts of the system described above.

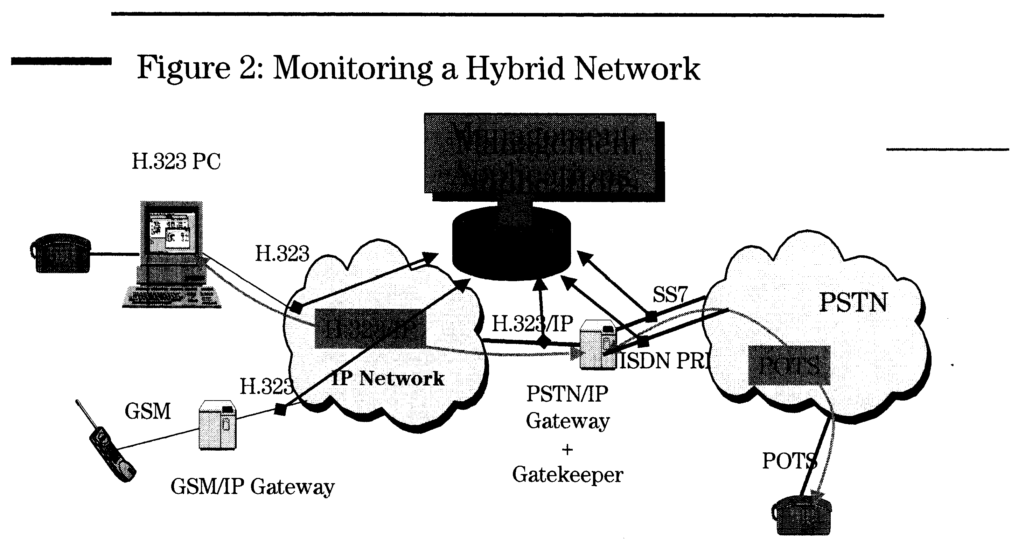

An example of a monitoring system architecture is given in Figure 2. This shows probes monitoring the PDN, SS7 network and the ISDN. The SS7 probes could be for example from the Hewlett-Packard *acceSS7* system. The ISDN primary rate access probes could for example be constructed using the same techniques as in existing protocol analysers (such as the Hewlett-Packard 37900D Signalling Test Set). The PDN probes could be constructed from the Hewlett-Packard LanProbes for example.

The distributed monitoring system is arranged to correlate real-time data from any combination of these probes. This includes, for example, signalling data from the SS7 links, signalling from the ISDN links (e.g. the D-channel for N-ISDN), the signalling data for the multimedia service from the PDN, and the multimedia stream data (e.g. data indicating packet loss, latency or jitter). It may also include the capture of the entire multimedia stream for applications like wire tapping or troubleshooting.

For convenience the invention is described primarily with reference to the H.323 recommendation, using IP as the PDN, and optionally connected to one or more SCNs using narrowband ISDN and/or SS7 signalling with trunk connections. However, it should be understood that this terminology is to be taken as including within its scope analogous functionality, whether or not they are customarily identified by the terms used in these standard recommendations.

### AUTO-DISCOVERY PROCESS

The PDN is continuously monitored for packets that provide configuration information on H.323 endpoints and gateways. These packets may be captured to create and maintain a database (the network discovery database) which gives configuration information, addressing information and relationships between the endpoints and gateways. The network discovery database may also take data from additional sources to supplement or verify the captured data Any discrepancies between the discovered data and the data from other sources should be used to generate an alarm to the network operator indicating a possible network configuration problem. The details of the data captured are described in the following paragraphs.

A type of transaction which is tracked by the monitoring system is the gateway discovery process. This is used by an endpoint to automatically find a gatekeeper which will provide service to it. The monitoring system uses the data captured from the sequence of messages between the endpoint and the gatekeeper, to identify endpoints and gateways and to build a database of the relationships between endpoints and gatekeeper. The database stores information derived from the captured data which identifies the endpoint and gatekeeper. This includes the network addresses and port numbers. The monitoring system monitors continuously for endpoint discovery attempts, to maintain an accurate database of the network configuration.

The endpoints may go through a registration process with its gatekeeper. This process may be repeated periodically if the registration has a finite lifetime. The monitoring system monitors the network continuously for packets involved in the registration process. The monitoring system captures the relevant packets and uses the data relating to the endpoint and gateway to update and add information to the database. This typically includes any transport addresses (transport address =(Network address, TSAP or port number)), any alias addresses and any other addressing or configuration information associated with the endpoint or gateway.

Endpoints may also request from a gatekeeper location information for an endpoint for which it has the alias. The monitoring system will continuously monitor for the exchange of packets associated with this location process and capture data from the relevant packets. This data can be used to update or add information to the network discovery database that identifies the relationship between aliases, transport addresses and any other addressing or configuration information. This may include information which identifies how to connect to a destination on the SCN (e.g. E.164 addresses).

Access tokens may be used to enable an endpoint to hide its transport address from the endpoint to which, it is establishing communication. The monitoring system will continuously monitor the network to capture packets that are used in the process of distributing access tokens to endpoints. The captured data is used to add to or update information in the network database indicating the association between an access token and an endpoint.

### GENERATION OF SERVICE RECORDS

This section lists the types of fields in service records, and describes how the distributed monitoring system could provide the required data. A service record is generated for each instance of the usage of a specific service. This is a generalisation of a call record, which is generated by current switches. A service is normally defined from the perspective of the user. The service may actually involve a number of calls or transactions, for example. In the case where only the PDN is being monitored, these service records include data from the signalling between any combination of gateways, gatekeepers, terminals and multi-point controllers; and data from the multimedia streams controlled by this signalling. In the case where the SCNs connected to the PDN are being monitored, the service record will also include data from the signalling data on the SCN collected from the probes connected to the SCN. The network discovery database may be used in constructing the service records to fill any address or configuration information which is not available directly from the packets involved in the call.

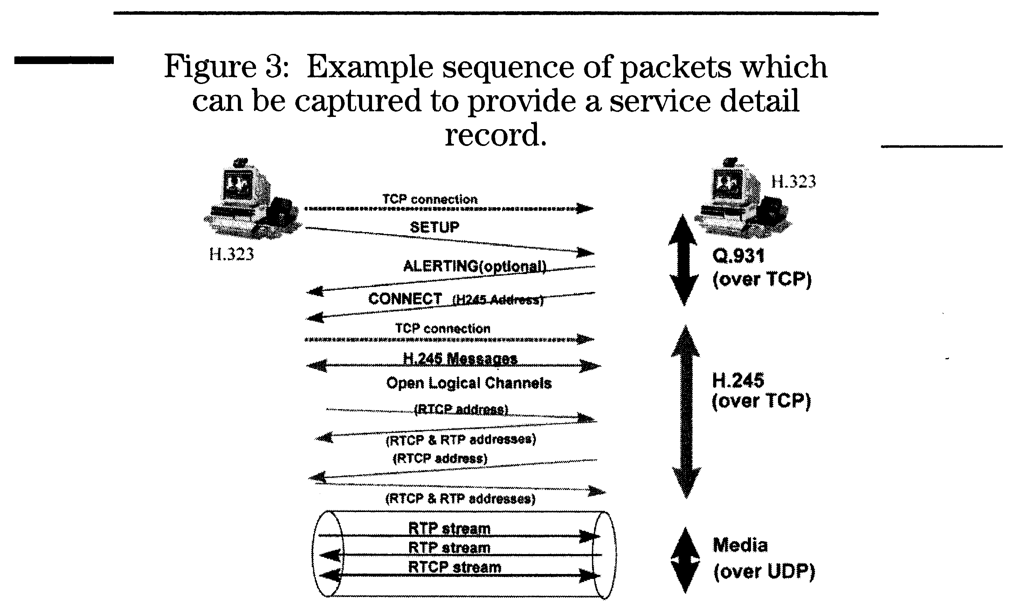

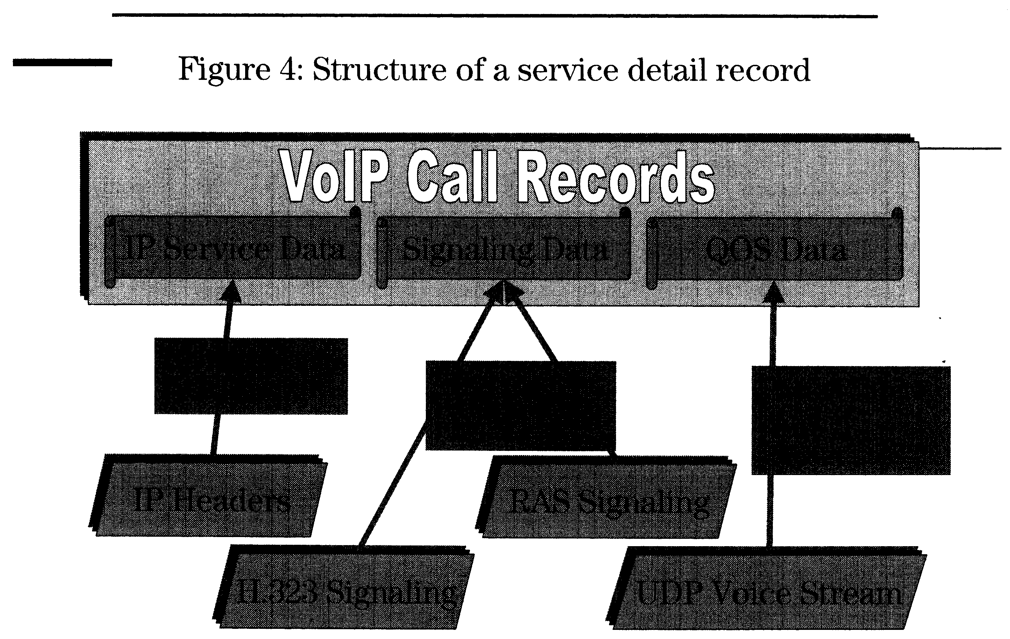

Figure 3 shows an example of the sequence of packets which may be captured at different levels in the overall stack of protocols (such as Q.931, H.245 and an unreliable datagram protocol - UDP) to provide a service detail record. Figure 4 illustrates how the information from these different parts of the overall transaction can be used to contribute to different respective parts of a service detail record.

### 1. Calling Party Information.

This includes any information which can be derived about the calling party from the signalling data flowing on the PDN, and is therefore available to the link monitoring probes. Typical information includes: calling party number; any ISDN sub-addressing information; calling party name; network addresses; TSAP or port numbers; alias addresses; and any numbers or addresses related to billing. This information can be derived from the sequence of messages used to setup a call. In the H.323 recommendation, this can be achieved by extracting the relevant fields from the Q.931 messages used in setting up the call (set-up, call proceeding, alerting, connect for example). In the cases where one or more gatekeepers are involved the admission signalling (H.225 ARQ and ACF messages for example) between gatekeeper and endpoint is captured to identify the logical channel for call signalling. The logical channel is typically identified using the transport address.

Additional information may be derived from call setup messages on the ISDN D channels of an interconnected SCN, at either the originating or terminating end or both; and/or from call setup messages on any of the SS7 links of the SCN. Additional information may also be derived from any intelligent network service messages that flow over the SS7 links as part of the specific service usage.

### 2. Called Party Information.

As for calling party information, but replace calling party by called party.

### 3. Information on each party in a conference.

The equivalent data to the calling party information for each party in a conference, with additional information on the conference objective (join conference, create coinference or invite for example) and a means to identify the conference ( Conference ID for example).

### 4. Network Routing and Logical Channel Information.

This may include any information on the network resources which were used to provide this specific service usage. The following are examples of data which might be provided:
- logical channels associated with the call and their identifiers,
- the requested media, codecs (coder/decoders), service quality and bandwidth for each channel,
- the negotiated media, codecs, service quality and bandwidth for each channel,
- any other performance or configuration data on the channels which are requested or established during the call or conference.
Each of these uses is time-stamped, and the sequence and nature of the use indicated. These data can be obtained in a similar way as was described for item 1 above from the capture of packets carrying signalling information. More specifically the logical channels can be identified by using the fields within an OpenLogicalChannel structure within certain messages defined in H.323 and associated recommendations. Subsequent messages which control the logical channels are also monitored and any changes in channel configuration can be time stamped and added to the service record.

A important additional set of information is the measured quality of service and bandwidth usage on each of the logical channels set-up as part of the call. This will typically include packet loss rates, latency and jitter measurements which are made over selected intervals by capturing packets from the logical channels and extracting the relevant fields.

### 5. Supplementary Services Information.

This may include any information on supplementary services used for this specific service usage. The following are some examples of the data which may be provided:
- call forwarding indication and address information;
- interactive voice response information on the use of intelligent peripherals;
- 800 number services;
- any custom services that may be invoked during the call or conference.
This information includes time-stamps, duration and the nature of the use. These data can be obtained in a similar way as was described for item 1 above.

### 6. Service Status and Termination Information.

This may include time-stamped information on the initiation of the service, time-stamped information on any status changes occurring during service and time-stamped information on the termination of the service. The termination information should include the reasons for termination.

These data call be obtained in a similar way as was described for item 1 above. In particular, the H.245 endSessionCommand message and the Q.931 call termination messages, the call clearing messages on the SS7 links and the ISDN D channels can provide details on the reasons for call termination.

### 7. Additional Service Quality Information.

The service quality information provided is dependent on the service indicated in the service type field. The following gives some examples of what call be provided for specific services.

Voice quality is mainly indicated by the bit error rate, jitter and delay. These parameters can be measured using a passive monitoring system and monitoring at two points in the network. Signalling information can be used to identify the logical channels on the PDN, the ISDN B channels or the time slots on SCN trunks, that are carrying the voice signals. The bit streams from each of the channels or trunk time slots identified can be compared to derive the delay, jitter and bit error rate caused by the intermediate networks.

### 8. Service Usage Information.

The type of usage data provided by the distributed monitoring system depends on the specific service. Some examples follow.

Voice, video and fax services require call duration and used bandwidth.

The data oriented services require data such as total bits, frames and packets in each direction. This may be provided for regular time intervals for the duration of the service. It may also be broken down into a traffic matrix, where the data protocol has additional addressing information (such as IP addresses). The data are obtained in a similar way as is described for item 1 above.

### 9. Security Information.

A particular instance of service usage may be an attempt to obtain unauthorised access to resources. The service record includes information which may indicate this type of behaviour. This may include information about the duration of call, the way the call was terminated and details of the service used.

An example would be where there are repeated failed attempts to gain access to different resources.

### REAL-TIME UPDATES ON SERVICE USE

The data that populates the service records described in the previous section can be collected in real-time from the monitoring probes. These data can be provided in real-time on remotely connected computers, as they become available. A user of the distributed monitoring system can apply filtering criteria on any of the information described in the previous section, to select those instances of service use for which real-time updates are required.

### WIRE-TAP CAPABILITY

Any of the data extracted from the signalling messages can be used to match criteria set by the user of the monitoring system and trigger some or all of the logical channels to be captured in their entirety. This technique can be used to provide a wire-tap capability, which would allow real-time copies of the media streams to be routed through the monitoring system to a third party, or stored for analysis. The filtering could also be on characteristics in the media stream (for example, a specific spoken word in an audio stream) which, if matched, would trigger the capture of all the service record information from the signalling messages, as described earlier.

### APPLICATIONS

The following applications can be implemented using the data from the service records described above or the real-time service updates. Data from other sources may be used to enhance the effectiveness of these applications.

### A. Quality of Service and Service Level Agreements.

The service records described above can be used to provide service quality information on selected customer's service. This can be used to track conformance to service level agreements, and be provided to the customer as an additional service. It can be provided as periodic reports, or in real-time using the real-time updates described above.

### B. Surveillance and Troubleshooting for Network Operations.

The service records and real-time updates can be used to identify service or network faults. The information can also be used to troubleshoot the faults.

### C. Fraud Detection.

The service records and real-time updates can be used to identify potential fraudulent use of the network or service. Indications may include excessive use of high value services, unusual call termination behaviour and repeated failures to gain access to a service. The distributed monitoring system may be used to track the service usage of potential high-risk users in real-time.

### D. Security and Hacking Detection

Potential security threats can be identified by repeated failures to gain access to a service. They also may be indicated by, successful access to sensitive services, such as maintenance ports on customer premises equipment (CPE). This type of data is available from the service records and the real-time updates.

### E. Billing Data

The service records can be used as a basis for billing which is dependent on any of the fields in the service record. This allows for example, billing to be based on the actual service quality delivered. It also enables billing to reflect the nature and generation of the usage of resources on the network, such as intelligent peripherals and databases. The billing data could be made available in real-time.

### F. Customer Accounting Data

The detailed service usage information in the service records can be provided to customers for use in their internal accounting. This includes the traffic matrix information for packet and frame based protocols, which the system derives from the B and D ISDN channels.

### G. Customer and Telecom Operator Network Planning

The service records can provide detailed information on the use of network resources which can be provided to network planning departments within the operator and the customer.

### H. Wire-tap

The wire-tap capability described above can be used to provide wire tap services to authorized third parties, and potentially as a trouble shooting tool.

## Claims

1. A method of generating generalised service detail records for telephony communications carried over a packet network, comprising the steps of:
- acquiring packet network service data from packets carrying the telephony communications;
- acquiring signalling data from a signalling protocol to identify at least one of addressing, configuration, status and timing information for endpoints, gatekeepers and connections involved in a call; and
- combining said packet service data and said signalling data to generate service detail records.

2. The method of claim 1, wherein some or all of the data is captured by a passive monitoring system.

3. The method of claim 1, wherein packet network service data are acquired from the protocol headers of the packets carrying the signalling data for the telephony service.

4. The method of claim 1, including using the information captured in the signalling messages to identify the logical channels carrying the media streams, and capture some or all of the packets on the logical channels in real-time at one or more points in the network.

5. The method of claim 4, wherein captured data are used to measure the quality of service actually achieved by each channel.

6. The method of claim 1, including using the information captured in the signalling messages to identify the logical channels carrying the media streams, and capture some or all of the packets on the logical channels in real-time at one or more points in the network.

7. The method of claim 6, wherein captured data are used to provide secret access to the media stream for troubleshooting or surveillance purposes.

8. The method of claim 7, wherein addressing information for the target user is used to select the correct signalling packets, potentially in conjunction with data from a network discovery database.

9. The method of claim 1, including correlating the data from the PDN with data collected from an SCN (such as a PSTN, ISDN or B-ISDN) to enhance the generalised service detail records.

10. The method of claim 9, including use of data collected from passive monitoring of the signalling network (e.g. SS7) or access signalling (e.g. ISDN, B-ISDN).

11. The method of claim 9, including use of data collected from the transmission network for audio or video quality.

12. The method of claim 1, including using the generalised service detail records to bill for the telephony service, optionally taking into account the quality of service and usage data, and optionally including tracking to see if customers have been exceeding their agreed bandwidth constraints.

13. The method of claim 1, including using the generalised service detail records to detect potentially fraudulent service usage, perform network planning, perform marketing studies, perform network operations funtions, modify the network configuration in real-time to achieve quality of service objectives, and/or perform customer care functions.

14. A method of discovering the network configuration of the endpoints, gatekeepers and their relationships, for a telephony communications service carried by a PDN, by using a passive monitoring system to capturing the signalling messages involved in the configuration and negotiation of relationships, addressing and resource allocation, between endpoints and gatekeepers.

15. A method of generating generalised service detail records for telephony communications carried over a packet network comprising the steps of:
- acquiring packet network service data for the packets carrying the telephony service;
- acquiring signalling data regarding at least one of call control, registration, admissions, bandwidth management, call status, address translation and intelligent network services;
- acquiring quality of service data for the telephony service transmission level; and
- combining said service data, said signalling data and said quality of service data to generate generalised service detail records.

16. The method of any one of the preceding claims, wherein the capture of packets is performed at multiple points in real time; and then correlated in real-time.

17. The method of any one of the preceding claims, wherein the telephony communications comprise real-time voice or audio, fax, voice-messaging, real time video or multimedia communications.

18. The method of any one of the preceding claims wherein the packet network is an IP, frame relay or ATM network.

19. A method of monitoring a packet data sub-network or link, comprising the steps of: monitoring at a first location signalling messages to detect the existence of a call; and monitoring at multiple other locations to identify some or all packets associated with the call.
